(19)

**Europäisches Patentamt**
**European Patent Office**
**Office européen des brevets**

(11)  **EP 4 575 917 A1**

(12)  **EUROPEAN PATENT APPLICATION**

(43) Date of publication:
25.06.2025  Bulletin 2025/26

(21) Application number: 23219086.8

(22) Date of filing: 21.12.2023

(51) International Patent Classification (IPC):
*G06N 5/045* (2023.01)   *G06N 20/00* (2019.01)

(52) Cooperative Patent Classification (CPC):
G06N 5/045; G06N 3/02; G06N 20/00

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Siemens Aktiengesellschaft**
**80333 München (DE)**

(72) Inventors:
• **Büttner, Florian**
**81541 München (DE)**
• **Decker, Thomas**
**85716 Unterschleißheim (DE)**

(74) Representative: **Siemens Patent Attorneys**
**Postfach 22 16 34**
**80506 München (DE)**

(54)  **RELIABILITY-CALIBRATED EXPLANATIONS FOR PREDICTIONS OF AN AI-BASED OPERATIONAL MODEL**

(57)     Computer-implemented method for obtaining reliability-calibrated explanations for a prediction of an AI-based operational model (f) applied in an industrial environment, comprising
- receiving (S1) an input data instance (x) collected in the industrial environment to be inspected and the operational model (f) which outputs a prediction (y) depending on the input data instance (x),
- applying (S2) a calibration function (c) to the operational model (f) resulting in a calibrated model (fc), wherein the calibration function (c) adapts the operational model (f) for processing a perturbated dataset (xp) which is structured similarly as an explanation dataset (xe),
- inputting (S3) the calibrated model (fc) and the input data instance (x) into an explanation function (e) which determines an importance of individual features of the input data instance (x) based on the explanation dataset (xe), and
- outputting (S4) the importance of the individual features of the input data instance (x) as calibrated explanation result (Ec).

Fig. 2

EP 4 575 917 A1

**Description**

The present disclosure relates to a computer-implemented method for obtaining reliability-calibrated explanations for predictions of an AI-based operational model applied in an industrial environment, a computer-implemented method for generating a calibration model of an AI-based operational model, a respective explanation apparatus and a calibration apparatus, as well as respective computer program products.

Ensuring the trustworthiness of Machine Learning and AI-based solutions is one of the core requirements for applying them in an industrial environment as operative AI model for, e.g., quality monitoring of a manufacturing process, control of machines like robots in a shop floor, anomaly detection and predictive maintenance of machines or object detection and control for autonomous driving vehicles. However, modern machine-learning methods like Deep Neural Networks are opaque black-box models that are notoriously hard to interpret. This lack of transparency with respect to the reasoning behind the provided output makes it difficult to rigorously assess the true reliability of a model.

Without the ability to explain, data analysts, domain experts, and potential operators often struggle with understanding the logic of the underlying AI system, which often causes mistrust in the true capabilities of the ML or AI based solution. Moreover, emerging legal regulations will most likely require that AI-based solution needs to be transparent to the end-user in specific applications which is currently not sufficiently guaranteed by modern machine learning models. Due to the significance of the problem, there already exists a variety of different approaches to increase the interpretability of black box models which are often referred to as Explainable AI (XAI). But their true effectiveness to provide actual insights into black box models is often questioned, as demonstrated by many related academic studies.

Explainable AI methods often ensure the ability to explain the output of a black box model via perturbation-based model evaluations to derive the importance of individual input features. However, since the black box models typically have not seen any such perturbed input data during training, it is very likely that the black box models will not behave properly when facing them during the computation of explanations. Hence, the reliability of the retrieved explanations might be severely impacted, and many academic studies have demonstrated related limitations.

Uncertainty calibration techniques are used to ensure that the model's output probabilities reflect actual correctness likelihoods. This means if a model predicts a defective part during production with 80% probability, then the model is uncertainty calibrated if, in exactly 80% of such predictions, the part is indeed defective. There have been a variety of post-hoc calibration methods proposed that fine-tune an operative model based on a validation dataset in order to produce well-calibrated predictions. However, this does not ensure that the model also works stable and robustly when confronted with specifically perturbed input data, as is the case when a perturbation-based explainability technique is used to comprehend a model prediction.

Therefore, it is an object of the present invention to improve the quality of explainability methods providing explanations of results output by industrial-grade operative AI-based models.

The object is met by the features of the independent claims. The features of the dependent claims define embodiments.

A first aspect concerns a computer-implemented method for obtaining reliability-calibrated explanations for a prediction of an AI-based operational model applied in an industrial environment, comprising the steps:

- receiving an input data instance collected in the industrial environment to be inspected and the operational model which outputs the prediction depending on the input data instance,
- applying a calibration function to the operational model resulting in a calibrated model, wherein the calibration function adapts the operational model for processing a perturbated dataset which is structured similarly as an explanation dataset,
- inputting the calibrated model and the input data instance into an explanation function which determines an importance of individual features of the input data for the prediction based on the explanation dataset, and
- outputting the importance of the individual features of the input data instance as calibrated explanation result.

The main advantage of the presented invention is that it increases the reliability of the calibrated explanation result determined by existing perturbation-based explanation functions by calibrating the operative model to the perturbations used by the explanation function.

In an embodiment of the method the explanation dataset is generated by applying at least one first perturbation function to the input data instance.

Thus, the explanation dataset consists of multiple perturbed versions of the input data instance of interest. The importance of the first feature is determined to be low if the calibrated model to be explained outputs a similar prediction when processing the unperturbed input data instance and when processing the explanation dataset where the first feature is perturbed. The generation of such explanation datasets is simple, requires only few processing capacity and results in a variety of different datasets. On the other side such a perturbation-based explanation function provides reliable information on the feature importance. In total this method provides reliable results with low processing effort.

In an embodiment of the method the perturbated dataset is generated by applying a second perturbation function to the input data instance, wherein the first perturbation function and the second perturbation function comprises the similar perturbation pattern.

This ensures that the operative model is adapted to input data which is structured similar than the explanation dataset.

In an embodiment of the method the perturbated dataset comprises several modified validation datasets, wherein each of the modified validation datasets is generated by applying a different second perturbation function to a validation dataset.

This facilitates the generation of a sufficient amount of data in the perturbated dataset.

In an embodiment of the method each of the second perturbation functions is parametrized by a different perturbation severance value.

This enables a flexible setting of the degree of modification of the modified validation datasets.

In an embodiment of the method the calibration function is any calibration method used for post-hoc uncertainty calibration.

In an embodiment of the method the calibration method is one of temperature scaling, vector scaling, spline calibration, Dirichlet calibration, Isotonic Regression, Matrix Scaling.

Post-hoc calibration methods determine calibrated confidence scores that are representative of the true likelihood of a prediction of a deep neural network. A classification model is calibrated, if the confidence of predictions matches the probability of being correct for all confidence levels. Thus, using a known post-hoc calibration method for adapting the operational AI model requires low additional "coding" effort and results in a close adaptation of the operational model to the perturbated dataset.

In an embodiment of the method the explanation function determining the calibrated explanation result is a perturbation-based explanation function, preferably one of Shapley Values, Local Interpretable Model-Agnostic Explanations, abbreviated LIME, Integrated Gradients, Feature Ablation, or Occlusion.

Perturbation-based explanation functions are well-known and provide valuable explanations with respect to such features which contribute most to the prediction of the inspected operational AI model.

A second aspect concerns a computer-implemented method for generating a calibrated model of an AI-based operational model applied in an industrial environment, comprising:

- receiving a validation dataset, at least one second perturbation function, and the operational model,
- generating a perturbated dataset by applying at least one second perturbation function to a validation dataset, wherein a first perturbation function and the second perturbation function comprise similar perturbation pattern, and wherein an explanation dataset is generated by applying at least one first perturbation function to an input data instance,
- applying a calibration function to the operational model resulting in a calibrated model, wherein the calibration function adapts the operational model in processing a perturbated dataset which is structured similarly as an explanation dataset used in an explanation function, and
- outputting the calibrated model.

The method for generating the calibrated model and especially applying the calibration function to the operational model prepares the operational model for such kind of perturbations in order to behave well during the explanation phase.

A third aspect concerns an explanation apparatus for obtaining reliability-calibrated explanations for a prediction of an AI-based operational model applied in an industrial environment, comprising:

- an input module, configured to receive an input data instance collected in the industrial environment to be inspected and the operational model which outputs a prediction depending on the input data instance,
- an explanation reliability calibrator module, configured to apply a calibration function to the operational model resulting in a calibrated model, wherein the calibration function adapts the operational model for processing a perturbated dataset which is structured similarly as an explanation dataset,
- an explanation module, configured to input the calibrated model and the input data instance into an explanation function which determines an importance of individual features of the input data for the prediction based on the explanation dataset, and
- an output module, configured to output the importance of the individual features of the input data instance as calibrated explanation result.

A fourth aspect concerns a calibration apparatus for generating a calibration model of an AI-based operational model applied in an industrial environment, comprising:

- an input module, configured to receive a validation dataset, at least one second perturbation function, and the operational model,
- a perturbation module, configured to generate a perturbated dataset by applying at least one second perturbation function to a validation dataset, wherein a first perturbation function and the second perturbation function comprises the similar perturbation pattern, and wherein an explanation dataset is generated by applying at least one first perturbation function to an input data instance,
- a calibration module, configured to apply a calibration function to the operational model resulting in a calibrated model, wherein the calibration function adapts the operational model in processing a perturbated dataset which is structured similarly as an explanation dataset used in an explanation function, and
- an output module, configured to output the calibrated model.

A fifth aspect concerns a computer program product directly loadable into the internal memory of a digital computer, comprising software code portions for obtaining reliability-calibrated explanations for a prediction of an AI-based operational model applied in an industrial environment when said product is run on said digital computer.

A sixth aspect concerns a computer program product directly loadable into the internal memory of a digital computer, comprising software code portions for generating a calibrated model of an AI-based operational model applied in an industrial environment when said product is run on said digital computer.

The invention will be explained in more detail by reference to accompanying figures. Similar objects will be marked by the same reference signs.

Figure 1     schematically illustrates an industrial environment in which a machine is monitored by an AI-based operational model and the prediction output by the AI-based operational model is explained by an explanation apparatus.

Figure 2     schematically illustrates an embodiment of the main steps of the method for obtaining reliabilitycalibrated explanations.

Figure 3     schematically illustrates an embodiment of the inventive method for generating a calibrated model of an AI-based operational model.

Figure 4     illustrates an example of a calibration apparatus configured to perform the method for generating a calibrated model of an AI-based operational model.

Figure 5     illustrates an example of an explanation apparatus configured to perform the method for obtaining reliability-calibrated explanations.

It is noted that in the following detailed description of embodiments, the accompanying drawings are only schematic, and the illustrated elements are not necessarily shown to scale. Rather, the drawings are intended to illustrate functions and the co-operation of components. Here, it is to be understood that any connection or coupling of functional units, modules, components or other physical or functional elements could also be implemented by a direct connection or an indirect connection coupling element, e.g., via one or more intermediate elements. A connection or a coupling of entities or components can for example be implemented by a wire-based, a wireless connection and/or a combination of a wire-based and a wireless connection. Functional modules can be implemented by dedicated hardware, e.g., processor, firmware or by software, and/or by a combination of dedicated hardware and firmware and software. It is further noted that each functional modules described for an apparatus can perform a functional step of the related method and vice versa.

Explainable AI (XAI), often overlapping with Interpretable AI, or Explainable Machine Learning, either refers to an AI system over which it is possible for humans to retain intellectual oversight, or to the methods to achieve this. The main focus is usually on the reasoning behind the decisions or predictions made by the AI which are made more understandable and transparent. XAI counters the "black box" tendency of machine learning, where even the AI's designers cannot explain why it arrived at a specific decision.

Ensuring the trustworthiness of Machine Learning and other AI-based solutions is one of the core requirements for applying AI-based solutions in an industrial environment as operative AI model for, e.g., quality monitoring of a manufacturing process, control of machines like robots in a shop floor, anomaly detection and predictive maintenance of machines or object detection and control for autonomous driving vehicles.

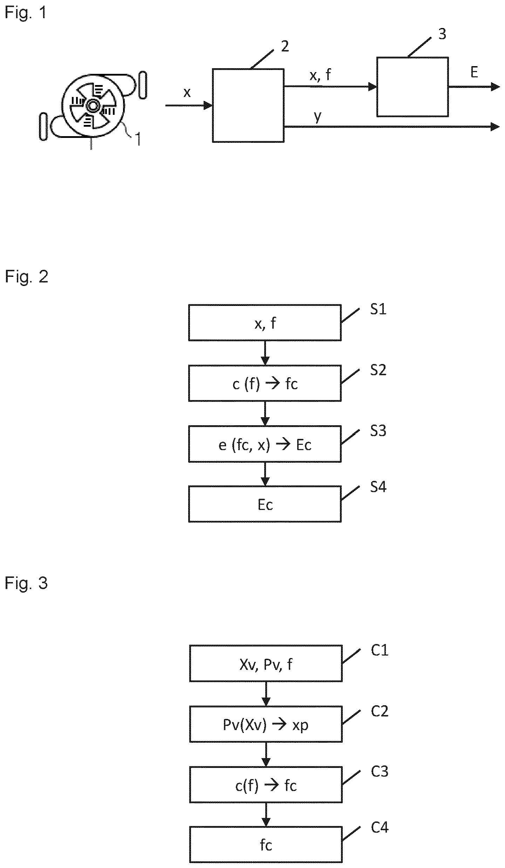

Fig.1 shows exemplarily a machine 1 in an industrial environment which is controlled or monitored by an operational AI-based model f. Data are collected at the machine 1, e.g., by sensors, and an input data instance x of the sensor data is input to an AI-based operational model f implemented in an assistance apparatus 2. The operational AI-based model f processes the input data instance x and outputs a prediction y, e.g., a classification result. The input data instance x and the operational model f is input to an explanation apparatus 3 which provides as an output an explanation result E providing an importance of the different features of the input data instance contributing to the prediction y.

The explanation result E does not only provide trust in the prediction and the AI-based operational model itself but provides also an indication to the ground truth of the prediction. For instance, if the operational model classifies the operation mode of the machine 1 in normal or abnormal operation mode, the explanation result provides an indication which of the features of the input data contributes most. Determining the reason for the detected abnormal mode can be assisted or derived by the most important features.

The approach described here aims to increase the faithfulness as well as the reliability of explanation results determined by an explanation function applied to the prediction output of the AI-based operational model by recalibrating the AI-based operational model to the specific needs of the utilized explainability function. The explainability of black box models like the AI-based operational model f is often ensured via perturbation-based model evaluations to derive the importance of individual input features. However, since AI-based operational models typically have not seen any such perturbed input data during training, it is very likely that they will not behave properly when facing them during the computation of explanations. Hence, the reliability of the retrieved explanations might be severely impacted and decreased.

The main steps of a method for obtaining reliability-calibrated explanations for the prediction y of an AI-based operational model as shown in Fig. 1 are illustrated in Fig. 2.

In a first step S1, an input data instance x collected in the industrial environment to be inspected and the operational model f which outputs the prediction y depending on the input data instance x. The operational model, e.g., machine learning model f:X,Y has been trained to make predictions y for the input data instances x in a set of input data X. In the next step S2, a calibration function c is applied to the operational model f resulting in a calibrated model fc. The calibration function c adapts the operational model f for processing a perturbated dataset xp.

The perturbated dataset xp is structured in the same way as an explanation dataset xe, which is applied in an explanation function e. The explanation dataset xe consists of multiple perturbed versions of the individual input data instance x of interest. The calibration function c outputs a calibrated model fc.

The calibrated model fc and the input data instance x are input into the explanation function e which determines an importance of individual features of the input data instance x for the prediction y based on the explanation dataset xe, see step S3. Finally, the importance of the individual features of the input data instance x is output as calibrated explanation result Ec, see S4.

The calibrated explanation result Ec explains the prediction f_(x) in a more reliable way compared to simply applying explanation techniques, here the explanation function e to the original operational model f without suitable reliability calibration.

A method for generating the calibrated model fc of the AI-based operational model f is depicted in Fig. 3 and described in more detail below.

A validation dataset Xv, at least one second perturbation function Pv, and the operational model f are obtained in a first step C1.

A perturbated dataset xp is generated by applying the at least one second perturbation function Pv to a validation dataset Xv. The at least one second perturbation function Pv consists of different perturbation functions

$$p_\lambda : X \to X$$

which are parametrized by a perturbation severance value $\lambda$ having values between 0 and 1.

The at least one second perturbation function Pv comprises a similar perturbation pattern as at least one first perturbation function Pe which is applied in the explanation function e to generate an explanation dataset xe, see C2. Preferably the second perturbation function Pv contains exactly the same kind of perturbation that will be used by the explanation function e to derive explanations later on. This is crucial, as the goal is to 'prepare' the model for such kind of perturbation in order to behave well during the explanation phase. The explanation dataset xe is generated by applying the at least one first perturbation function Pe to an input data instance x, as described above.

The calibration function c is applied to the operational model f resulting in a calibrated model fc. The calibration function c adapts the operational model f in processing the perturbated dataset xp which is structured similarly as an explanation dataset xe used in an explanation function e, see step C3. Finally, the calibrated model fc is output, see step C4.

The calibration function fc is any calibration technique that is also used for post-hoc uncertainty calibration. Uncertainty calibration is known to be applied to deep neural networks, which is one possible AI-based model applied as operational model f in industrial environments. Due to their high predictive power, deep neural networks are increasingly being used as part of decision-making systems in real world applications. However, such systems require not only high accuracy, but also reliable and calibrated uncertainty estimates.

A classifier, e.g., implemented by a deep neural network, is calibrated, if the confidence of predictions matches the probability of being correct for all confidence levels. Especially in safety critical applications in medicine where average case performance is insufficient, but also in dynamically changing environments in industry, practitioners need to have access to reliable predictive uncertainty during the entire life cycle of the model. This means confidence scores (or predictive uncertainty) should be well calibrated not only for in-domain predictions, but also under gradual domain drift when the distribution of the input samples gradually changes from in-domain to truly out-of-distribution.

A popular approach towards well-calibrated predictions is post-hoc calibration methods where a validation set, drawn from the generative distribution of the training data is used to rescale the outputs returned by a trained neural network such that in-domain predictions are well calibrated. More details on post-hoc calibration can be found in an article "Post-hoc Uncertainty Calibration for Domain Drift Scenarios" by Christian Tomani et al published under https://arxiv.org/abs/2012.1098.

Using the post-hoc calibration in an explanation-reliability calibration approach to increase the reliability on explanation results is an entirely different and novel calibration objective compared to existing uncertainty calibration approaches.

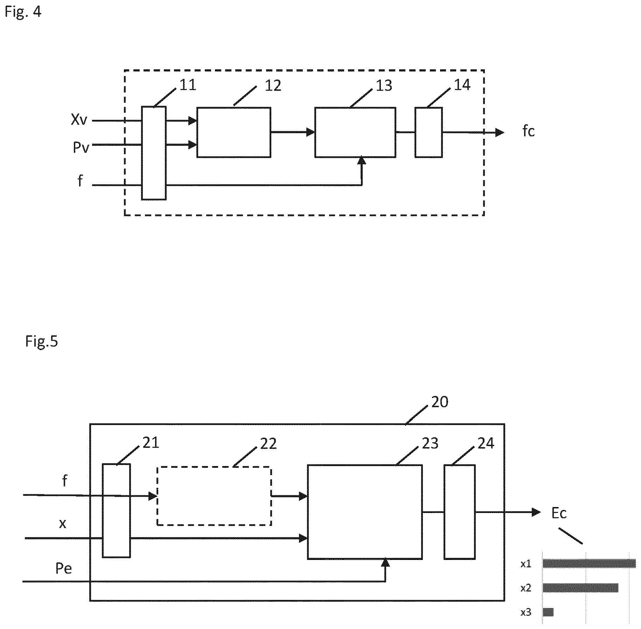

An embodiment of a calibration apparatus is depicted in Fig. 4 and described below in more detail.

Calibration apparatus 10 comprises an input module 11, a perturbation module 12, a calibration module 13 and an output moule 14. The modules 11-13 are communicatively linked and implemented by at least one processor.

The input module 11 is configured to receive a validation dataset Xv, at least one second perturbation function Pv, and the operational model f. The validation dataset Xv comprises of validation data instances xv and a prediction yv assigned to the validation data instance xv. The validation dataset Xv comprises for instance a subset of training data used for training the operative model f. In another embodiment, the validation dataset comprises any set of datapoints and associated labels which are sampled at the similar or same machine deployed in the same industrial environment. The input module 11 passes the validation dataset xv and at least one second perturbation function Pv to the perturbation module 12.

The perturbation module 12 is configured to create a perturbated dataset xp. The perturbated dataset xp is formed as

$$\left(\tilde{X}_{val}, \tilde{y}_{val}\right) = \{(p_\lambda(x), (1-\lambda)y + \lambda u) \mid x \in X_{val}, y \in y_{val}, p_\lambda \in Pv\}$$

where u is a uniform distribution of same dimension as the prediction y. Thus, the perturbated dataset xp comprises several modified validation datasets. Each of the modified validation datasets is generated by applying a different second perturbation function Pv to a validation dataset. Each of the second perturbation functions Pv is parametrized by a different perturbation severance value as already described above. It is important note that the second perturbation function Pv and the first perturbation function Pe are the same or at least similar perturbation functions.

This modified validation dataset xp is passed to the calibration module 13. The calibration module 13 is configured to receive the modified validation dataset xp and the operational model f. In the calibration module 13 a calibration function c is implemented which is applied together with the modified validation dataset xp to the operational model f to obtain a calibrated model fc. Initially, the calibration function c itself is trained to fulfill the condition that the calibration function c processing the operational model f at modified validation dataset xp outputs the label yval assigned to the modified validation dataset xp. I.e, parameters of the calibration c are optimized thus to fulfill

$$f_c(\tilde{x}) = c\left(f(\tilde{x})\right) \approx \tilde{y}, \quad \text{for each } (\tilde{x}, \tilde{y}) \in \left(\tilde{X}_{val}, \tilde{y}_{val}\right).$$

It is important to note, that only the parameters of the calibration function c are optimized and not the parameters of the operational function f to ensure that still the same operational model f is explained, e.g., by the explanation function e.

The calibration function c implemented in the calibration module 13 is any calibration technique that is also used for a post-hoc uncertainty calibration, such as temperature scaling, vector scaling, spline calibration, Dirichlet calibration, Isotonic Regression, Matrix Scaling. Specific for the calibration function c is that it is operating on a specifically modified validation dataset, i.e., the perturbated dataset xp.

When the operational model f is input to the calibration module 13 the calibration function c is applied to the operational model f resulting in a calibrated model fc. The calibration module is configured to forward the calibration model fc to the output module 14 which outputs it.

The calibration apparatus 10 can be used as a module within an explanation apparatus 20, see Fig. 5, which postprocesses an operational model f.

The explanation apparatus 20 provides a reliability calibrated model explanation system. The explanation apparatus 20 is configured to perform the above-described method for obtaining reliability-calibrated explanations for a prediction of an AI-based operational model applied in an industrial environment.

The explanation apparatus comprises an input module 21, an explanation reliability calibrator module 22, an explanation module 23 and an output module 24. The modules are implemented by at least one processor and communicatively connected.

The input module 21 is configured to receive an input data instance x collected in the industrial environment, the operational model f which outputted a prediction y depending on the input data instance x and optionally a set of first perturbation functions Pe. In an embodiment, the first perturbation functions Pe are already comprised in the explanation module 13, e.g., as part of an explanation function e.

The explanation reliability calibrator module 22 is configured to input the operational model f and to output a calibrated model fc. The explanation reliability calibrator module 22 comprises a calibration function c which prepares the operational model f to be analyzed by the explanation module 23 using an explanation dataset xe. The explanation reliability calibrator module 22 can be implemented by the calibration apparatus 10.

The explanation module 23 is configured to receive the calibrated model fc from the explanation reliability calibrator module 22 and to receive the input data instance from the input module 21. The explanation module 23 is configured to input the calibrated model fc and the input data instance x into an explanation function e which determines a calibrated explanation result Ec which is an importance of individual features x1, ..., x3 of the input data instance x for the prediction y based on the explanation dataset xe. The explanation module 23 comprises an explanation function e determining a calibrated explanation result Ec. The explanation function e is a perturbation-based explanation function, preferably one of Shapley Values, Local Interpretable Model-Agnostic Explanations (LIME), Integrated Gradients, Feature Ablation, or Occlusion.

The output module 24 is configured to output the calibrated explanation result Ec. In an embodiment the output module 24 comprises a graphical user interface displaying the calibrated explanation result Ec by the diagram as depicted in Fig. 5 which presents the importance of the individual features x1, ..., x3.

In other words, instead of simply applying explainablity techniques to the original operational model f, the operational model f is augmented with the explanation reliability calibrator module 22 to obtain the calibrated model fc which is adapted to process perturbed dataset which are similar to the explanation dataset applied in the explanation module.

The calibrated model fc is passed together with the input data instance x to the explanation module 23. The explanation module 23 is designed to identify how important individual input features of x, denoted by x1, x2, x3, are for the prediction which is output by the calibrated model fc depending on the input data instance x.

The calibrated explanation result Ec is typically computed by evaluating the calibrated model fc based on perturbed versions xe of input data instance x, which are obtained using perturbations in first perturbation function Pe. The output calibrated explanation result Ec is more reliable compared to simply applying explanation techniques to the original operational model f without suitable reliability calibration.

For the input data instance being an image, the explanation dataset comprises several versions of this image where different areas of the image are "greyed out" or modified elsewhere.

The main advantage of the presented approach is that it increases the reliability of existing perturbation-based explanation techniques by calibrating the operational model to the used perturbation in the explanation module. This ensures that during the computation of feature importance, the explanation module does not misbehave which could otherwise lead to significantly biased explanations that might confuse data scientists and domain experts and potentially lead to wrong conclusions, e.g., root causes.

It is to be understood that the above description of examples is intended to be illustrative and that the illustrated components are susceptible to various modifications. For example, the illustrated concepts could be applied for different technical systems and especially for different subtypes of the respective technical system with only minor adaptions.

## Claims

1. Computer-implemented method for obtaining reliability-calibrated explanations for a prediction of an AI-based operational model (f) applied in an industrial environment, comprising

   - receiving (S1) an input data instance (x) collected in the industrial environment to be inspected and the operational model (f) which outputs a prediction (y) depending on the input data instance (x),
   - applying (S2) a calibration function (c) to the operational model (f) resulting in a calibrated model (fc), wherein the calibration function (c) adapts the operational model (f) for processing a perturbated dataset (xp) which is structured similarly as an explanation dataset (xe),
   - inputting (S3) the calibrated model (fc) and the input data instance (x) into an explanation function (e) which determines an importance of individual features of the input data instance (x) based on the explanation dataset (xe), and
   - outputting (S4) the importance of the individual features of the input data instance (x) as calibrated explanation result (Ec).

2. Computer-implemented method according to claim 1, wherein the explanation dataset (xe) is generated by applying at least one first perturbation function (Pe) to the input data instance (x).

3. Computer-implemented method according to claim 2, wherein the perturbated dataset (xp) is generated by applying a second perturbation function (Pv) to the input data instance (x), wherein the first perturbation function (Pe) and the second perturbation function (Pv) comprises similar perturbation pattern.

4. Computer-implemented method according to claim 3, wherein the perturbated dataset (xp) comprises several modified validation datasets, wherein each of the modified validation datasets is generated by applying a different second perturbation function (Pv) to a validation dataset (xv).

5. Computer-implemented method according any of claims 3 or 4, wherein each of the second perturbation functions (Pv) is parametrized by a different perturbation severance value.

6. Computer-implemented method according to any of the preceding claims, wherein the calibration function (c) is any calibration method used for post-hoc uncertainty calibration.

7. Computer-implemented method according to claim 6, wherein the calibration method (c) is one of temperature scaling, vector scaling, spline calibration, Dirichlet calibration, Isotonic Regression, Matrix Scaling.

8. Computer-implemented method according to any of the preceding claims, wherein the explanation function (e) is any perturbation-based explanation function, preferably one of Shapley Values, Local Interpretable Model-Agnostic Explanations (LIME), Integrated Gradients, Feature Ablation, or Occlusion.

9. Computer-implemented method for generating a calibrated model (fc) of an AI-based operational model applied in an industrial environment, comprising

- receiving (C1) a validation dataset (xv), at least one second perturbation function (Pv), and the operational model (f),
- generating (C2) a perturbated dataset (xp) by applying at least one second perturbation function (Pv) to a validation dataset (xv), wherein a first perturbation function (Pe) and the second perturbation function (Pv) comprise a similar perturbation pattern, and wherein an explanation dataset (xe) is generated by applying at least one first perturbation function (Pe) to an input data instance (x),
- applying (C3) a calibration function (c) to the operational model (f) resulting in a calibrated model (fc), wherein the calibration function (c) adapts the operational model (f) in processing a perturbated dataset (xp) which is structured similarly as an explanation dataset (xe) used in an explanation function (e), and
- outputting (C4) the calibrated model (fc).

10. Explanation apparatus (20) for obtaining reliability-calibrated explanations for a prediction of an AI-based operational model (f) applied in an industrial environment, comprising:

- an input module (21), configured to receive an input data instance (x) collected in the industrial environment to be inspected and the operational model (f) which outputs a prediction (y) depending on the input data instance (x),
- an explanation reliability calibrator module (22), configured to apply a calibration function (c) to the operational model (f) resulting in a calibrated model (fc), wherein the calibration function (c) adapts the operational model (f) for processing a perturbated dataset (xp) which is structured similarly as an explanation dataset (xe),
- an explanation module (23), configured to input the calibrated model (fc) and the input data instance (x) into an ex-planation function (e) which determines an importance of in-dividual features of the input data instance (x) for the pre-diction (y) based on the explanation dataset (xe), and
- an output module (24), configured to output the importance of the individual features of the input data instance (x) as calibrated explanation result (Ec).

11. Calibration apparatus (10) for generating a calibrated model (fc) of an AI-based operational model (f) applied in an industrial environment, comprising:

- an input module (11), configured to receive a validation dataset (xv), at least one second perturbation function

(Pv), and the operational model (f),
- a perturbation module (12), configured to generate a perturbated dataset (xp) by applying at least one second perturbation function (Pv) to a validation dataset (xv), wherein a first perturbation function (Pe) and the second perturbation function comprises similar perturbation pattern, and wherein an explanation dataset (xe) is generated by applying at least one first perturbation function to an input data instance (x),
- a calibration module (13), configured to apply a calibration function (c) to the operational model (f) resulting in a calibrated model (fc), wherein the calibration function (c) adapts the operational model (f) in processing a perturbated dataset (xp) which is structured similarly as an explanation dataset (xe) used in an explanation function (e), and
- an output module (14), configured to output the calibrated model (fc).

12. A computer program product directly loadable into the internal memory of a digital computer, comprising software code portions for performing the steps of claims 1 and 8 when said product is run on said digital computer.

13. A computer program product directly loadable into the internal memory of a digital computer, comprising software code portions for performing the steps of claims 9 when said product is run on said digital computer.

Fig. 1

Fig. 2

Fig. 3

Fig. 4

Fig.5

Europäisches
Patentamt

European
Patent Office

Office européen
des brevets

# EUROPEAN SEARCH REPORT

**Application Number**

EP 23 21 9086

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DON DULEEP RATHAMAGE ET AL: "Explainability Audit: An Automated Evaluation of Local Explainability in Rooftop Image Classification", 2022 IEEE 23RD INTERNATIONAL CONFERENCE ON INFORMATION REUSE AND INTEGRATION FOR DATA SCIENCE (IRI), IEEE, 9 August 2022 (2022-08-09), pages 184-189, XP034183042, DOI: 10.1109/IRI54793.2022.00049 [retrieved on 2022-09-08] * the whole document * | 1-13 | INV. G06N5/045 G06N20/00 |
| A | FLAVIO DI MARTINO ET AL: "Explainable AI for clinical and remote health applications: a survey on tabular and time series data", ARXIV.ORG, CORNELL UNIVERSITY LIBRARY, 201 OLIN LIBRARY CORNELL UNIVERSITY ITHACA, NY 14853, 14 September 2022 (2022-09-14), XP091317730, * Sections 1, 3, and 4 * | 1-13 | |
| A | MARIANI GIOVANNI ET AL: "DRuiD: Designing reconfigurable architectures with decision-making support", 2014 19TH ASIA AND SOUTH PACIFIC DESIGN AUTOMATION CONFERENCE (ASP-DAC), IEEE, 20 January 2014 (2014-01-20), pages 213-218, XP032570045, DOI: 10.1109/ASPDAC.2014.6742892 [retrieved on 2014-02-18] * Section IV.iii * | 1-13 | |

TECHNICAL FIELDS
SEARCHED      (IPC)

G06N

-/--

The present search report has been drawn up for all claims

| Place of search | Date of completion of the search | Examiner |
|---|---|---|
| The Hague | 4 June 2024 | Mariani, Giovanni |

EPO FORM 1503 03.82 (P04C01)

page 1 of 2

Europäisches
Patentamt

European
Patent Office

Office européen
des brevets

# EUROPEAN SEARCH REPORT

Application Number

EP 23 21 9086

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | SAINI ADITYA ADITYA18125@IIITD AC IN ET AL: "Select Wisely and Explain: Active Learning and Probabilistic Local Post-hoc Explainability", PROCEEDINGS OF THE 13TH ACM INTERNATIONAL CONFERENCE ON BIOINFORMATICS, COMPUTATIONAL BIOLOGY AND HEALTH INFORMATICS, ACMPUB27, NEW YORK, NY, USA, 26 July 2022 (2022-07-26), pages 599-608, XP058801214, DOI: 10.1145/3514094.3534191 ISBN: 978-1-4503-9682-0 * abstract * * Sections 1, 4-6 * | 1-13 | |

----- 

|  |  |  | TECHNICAL FIELDS SEARCHED (IPC) |
|---|---|---|---|

The present search report has been drawn up for all claims

| Place of search | Date of completion of the search | Examiner |
|---|---|---|
| The Hague | 4 June 2024 | Mariani, Giovanni |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.................................................................

& : member of the same patent family, corresponding document

EPO FORM 1503 03.82 (P04C01)

page 2 of 2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **CHRISTIAN TOMANI et al.** *Post-hoc Uncertainty Calibration for Domain Drift Scenarios*, https://arxiv. org/abs/2012.1098